# EUROPEAN PATENT APPLICATION

(11) **EP 1 073 166 A2**
(43) Date of publication of application: **31.01.2001**
(21) Application number: 00115756.9
(22) Date of filing: 21.07.2000
(51) Int. Cl.: H01S 3/131, H01S 3/067

(54) **L-band optical fiber amplifier using feedback loop**

(30) Priority: 22.07.1999 KR 2982799
(71) Applicant: SAMSUNG ELECTRONICS CO., LTD., Suwon-City, Kyungki-do (KR)
(72) Inventor: Hwang, Seong-Teak, Pyongtaek-shi, Kyonggi-do (KR); Yoon, Soo-young, Yongin-shi, Kyonggi-do (KR); Jung, Rae-Sung c/o Samsung Electronics Co., Ltd.,, Pundang-Gu, Sungnam-Shi, Kyunggi-Do (KR); Kim, Jeong-Mee, c/o Samsung Electronics Co., Ltd., Pundang-Gu, Sungnam-Shi, Kyunggi-Do (KR); Kim, Sung-Jun, Pyongtaek-shi, Kyonggi-do (KR)
(74) Representative: Grünecker, Kinkeldey, Stockmair & Schwanhäusser Anwaltssozietät

(57) **Abstract**

Disclosed is a long-band (L-band) fiber amplifier using a feedback loop which includes a rare earth doped fiber as an amplification medium, forward and backward pump laser diodes, positioned on front and rear ends of the rare earth doped fiber, respectively, for generating pumping lights, first wavelength selective couplers for providing the pumping lights from the pump laser diodes to the rare earth doped fiber, optical isolators, inserted into front and rear ends of the first wavelength selective couplers, respectively, for intercepting backward propagation of signal lights reflected from input and output terminals of the fiber amplifier, a feedback loop for making a seed beam incident to the rare earth doped fiber or making an amplified spontaneous emission (ASE) incident again to the rare earth doped fiber, second wavelength selective couplers, provided between the optical isolators and the first wavelength selective couplers, respectively, for making the seed beam incident to the feedback loop or extracting and providing the ASE to the feedback loop, and a filter, connected to the feedback loop, for filtering a specified wavelength of the seed beam or the ASE.

## Description

### BACKGROUND OF THE INVENTION

### 1. Field of the Invention

The present invention relates to a fiber amplifier of an optical communication system, and more particularly to a fiber amplifier of a long band (1575nm ∼ 1605nm) used for widening an amplification band of a fiber amplifier.

### 2. Description of the Related Art

At present, as the demand for communications is increased, a wavelength division multiplexing (WDM) optical communication system has been widely used. Accordingly, researches for a fiber amplifier that can accommodate more channels have been actually progressed.

Typically, the wavelength division multiplexing (WDM) communication system simultaneously transmits signal lights of various channels through a single optical path. In the case of transmitting such signal lights over several thousands of kilometers, the loss of the signal lights occurs every several tens of kilometers, and thus a fiber amplifier for compensating for the loss is installed midway.

Also, in the wavelength division multiplexing (WDM) communication system using a multichannel, the channel spacing generally used is 0.8nm, and the number of channels is increased to 8, 16, 32, 40, 64, etc. The wavelength band in the range of 1528nm ∼ 1562nm, i.e., the conventional band (C-band) which is the amplification band of the existing erbium doped fiber amplifier (EDFA), can be used until the number of channels reaches 40, but a new wavelength band is required if the channel number is increased over 64. If the channel spacing is determined to be 0.4nm in the existing wavelength band, the number of channels that can be used is increased up to 80 channels, but many technical difficulties exist due to a nonlinear phenomenon, etc. Accordingly, researches for a new wavelength band in the range of 1575nm ∼ 1605nm, i.e., a long band (L-band) which can be amplified by the erbium doped fiber amplifier (EDFA), have been actively progressed.

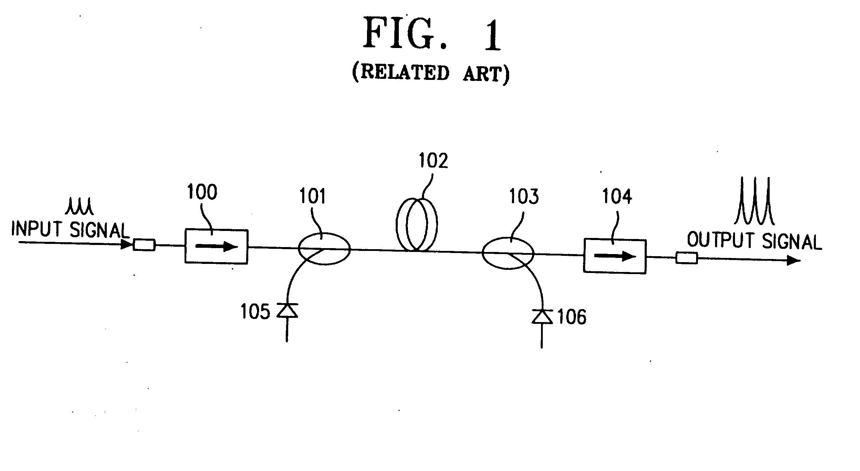

FIG. 1 is a view illustrating the construction of a general erbium doped fiber amplifier (EDFA). Referring to FIG. 1, the conventional EDFA comprises optical isolators 100 and 104 for intercepting lights propagating in a backward direction, an erbium doped fiber (EDF) 102 that is an amplification medium, and wavelength selective couplers (WSC) 101 and 103 for making pumping lights from pump light sources 105 and 106 incident to the EDF 102.

The conventional L-band EDFA as constructed above has the same structure as the EDFA for amplifying the C-band of 1530nm ∼ 1560nm, and in order to increase the gain of the L-band, the length of the EDF 102 is 10 times lengthened.

However, the conventional EDFA has the drawbacks in that if the same pumping light is used, its amplification efficiency is lowered in comparison to the C-band EDFA since the EDF 102 is lengthened. Basically, the L-band EDFA has a relatively superior gain evenness in comparison to the C-band EDFA, but the gain evenness thereof is changed according to the strength of the input signal light or the strength of the pumping light in the same manner as the C-band EDFA.

The L-band EDFA amplifies the optical signal by exciting Erbium ions by an amplified spontaneous emission (ASE) generated in the C-band EDFA. Generally, the pumping efficiency of the EDFA is in proportion to the peak power of the pumping light rather than the total power of the pumping light.

However, according to the ASE, the strength of the total power is high, but the strength of the peak power is low, so that the pumping efficiency is lowered.

### SUMMARY OF THE INVENTION

Accordingly, the present invention has been made in an effort to solve the problems occurring in the related art, and an object of the present invention is to provide a long-band (L-band) erbium doped fiber amplifier which can increase the amplification efficiency in the L-band, so that the communication capacity is increased in developing a fiber amplifier having a long amplification band.

It is another object of the present invention to provide an L-band erbium doped fiber amplifier which can reduce the manufacturing cost thereof.

It is still another object of the present invention to provide an L-band erbium doped fiber amplifier which can improve the gain evenness according to the wavelength of the signal light.

In order to achieve the above objects, according to the present invention, there is provided an L-band fiber amplifier comprising a rare earth doped fiber as an amplification medium, forward and backward pump laser diodes, positioned on front and rear ends of the rare earth doped fiber, respectively, for generating pumping lights, first wavelength selective couplers for providing the pumping lights from the pump laser diodes to the rare earth doped fiber, optical isolators, inserted into front and rear ends of the first wavelength selective couplers, respectively, for intercepting backward propagation of signal lights reflected from input and output terminals of the fiber amplifier, a feedback loop for making a seed beam incident to the rare earth doped fiber or making an amplified spontaneous emission (ASE) incident again to the rare earth doped fiber, second wavelength selective couplers, provided between the optical isolators and the first wavelength selective couplers, respectively, for making the seed beam incident to the feedback loop or extracting and providing the ASE to the feedback loop, and a filter, connected to the feedback loop, for filtering a specified wavelength of the seed beam or the ASE

Preferred embodiments are disclosed in the dependent claims.

### BRIEF DESCRIPTION OF TILE DRAWINGS

The above objects and advantages of the present invention will become more apparent by describing in detail the preferred embodiments thereof with reference to the attached drawings in which:
FIG. 1 is a block diagram illustrating the construction of a conventional fiber amplifier;
FIG. 2 is a block diagram illustrating the construction of a fiber amplifier using a feedback loop provided with a forward optical isolator according to a first embodiment of the present invention;
FIG. 3 is a block diagram illustrating the construction of a fiber amplifier using a feedback loop provided with a backward optical isolator according to a first embodiment of the present invention;
FIG. 4 is a graph illustrating the gain characteristic of the fiber amplifier using a feedback loop according to the present invention compared with that of the conventional fiber amplifier using no feedback loop in the L-band;
FIG. 5 is a block diagram illustrating the construction of a fiber amplifier using a feedback loop provided with a forward optical isolator according to a second embodiment of the present invention;
FIG. 6 is a block diagram illustrating the construction of a fiber amplifier using a feedback loop provided with a backward optical isolator according to a second embodiment of the present invention; and
FIG. 7 is a graph illustrating the attenuation degree of signal lights in the feedback loop with respect to three signal lights having different wavelengths from one another, but the same strength, i.e., the gains of the three signal lights according to the strength of the seed beam.

### DETAILED DESCRIPTION OF THE PREFERRED EMBODIMENTS

The preferred embodiments of the present invention will now be explained in detail with reference to the accompanying drawings. In the following description of the present invention, a detailed description of known functions and configurations incorporated herein will be omitted when it may make the subject matter of the present invention rather unclear.

If the light of the conventional band (C-band) is used as the seed beam to compress the ASE having a long band (L-band) to a light having a narrow band, an excited light having a large maximum output which can excite the L-band can be obtained, and thus the amplification efficiency of the L-band can be increased. Here, the seed beam is a kind of an auxiliary light source, and according to the present invention, it is called the ASE generated when an input light passes through the erbium doped fiber.

The seed beam according to the present invention can be used as an independent light source, and also as a light source to which the ASE of the EDFA is fed back. According to the present invention, it is exemplified that the fiber amplifier uses the ASE as the seed beam, and the erbium doped fiber is used as the amplification medium. However, the amplification medium according to the present invention is not limited to the erbium doped fiber.

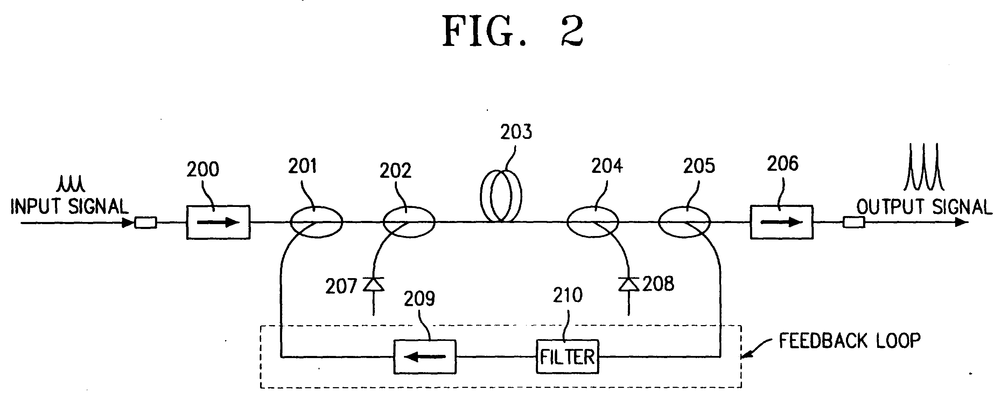

FIG. 2 is a block diagram illustrating the construction of an erbium doped fiber amplifier according to a first embodiment of the present invention. Especially, FIG. 2 shows the fiber amplifier for making the seed beam incident in a forward direction using the amplified spontaneous emission (ASE) generated when the optical signal is amplified using the EDF. Referring to FIG. 2, the present invention has the construction which increases the output in the L-band by adding the seed beam to the existing erbium doped fiber amplifier.

According to the fiber amplifier according to the first embodiment of the present invention, an erbium doped fiber (EDF) 203 is used as the amplification medium, and front and rear optical isolators 200 and 206 are inserted to intercept the backward lights centering around the EDF 203. Also, first wavelength selective couplers (WSC) 202 and 204 are used for making the respective pumping lights from forward and backward pumping light sources 207 and 208 incident to the EDF 203.

At this time, the present invention employs a feedback loop using a specified wavelength of the ASE to make the seed beam. The feedback loop of the fiber amplifier according to the embodiment of the present invention is provided with a filter 210 for selecting the specified wavelength to make the seed beam, and an optical isolator 209 for preventing the backward propagation of the seed beam fed back. Also, the present invention employs second wavelength selective couplers 201 and 205 for making the seed beam extracted by the feedback loop incident again to the EDF 203.

The optical isolator 209 is a forward optical isolator the propagation direction of which is the same as that of the signal light. The filter 210 for selecting the specified wavelength is inserted between the second wavelength selective coupler 205 and the forward optical isolator 209.

According to the present invention, the second wavelength selective couplers (WSC) 201 and 205 are used for making the seed beam incident again to the EDF using the feedback loop, and the ASE is fed back to the amplification medium using the wavelength selective couplers 201 and 205.

The operation of the erbium doped fiber amplifier as constructed above will be explained in detail. The input optical signal inputted through an input terminal is combined with the pumping light, which is generated from the forward pump light source 207 provided on the front of the EDF 203, by the first wavelength selective coupler 202, and then is incident to the EDF 203. The pumping light generated from the backward pump light source 208 provided on the rear of the EDF 203 is incident to the EDF 203 through the second wavelength selective coupler 204. The incident forward and backward pumping lights excite erbium ions in the EDF 203. The light signal passing through the EDF is amplified by the stimulated emission of the excited erbium ions. The first and second optical isolators 200 and 206 prevent the deterioration of the amplification efficiency of the optical signal by preventing the ASE generated from the EDF 203 from being reflected from optical elements such as a signal input/output connector and then being incident again to the EDF 203.

At this time, in order to heighten the output in the L-band in the range of 1570nm ∼ 1620mn using the erbium doped fiber amplifier for amplifying the optical signal, the length of the amplification medium, i.e., the length of the EDF 203 should be sufficiently lengthened. Especially, the length of the EDF 203 used for the L-band EDFA is 10 times longer than that generally used for the C-band EDFA.

The erbium ions excited by the pumping lights from the forward and backward pump light sources 207 and 208 are under the amplified spontaneous emission (ASE), and then the ASE lights generate a high output ASE in the C-band of 1528nm ∼ 1562nm by the stimulated emission. The ASE of the C-band is absorbed as it passes through the EDF 203, and this causes the light of the L-band wavelength, which is longer than the C-band wavelength, to be amplified. Accordingly, if the length of the EDF 203 is lengthened in order to increase the source output in the L-band, the output of the C-band is reduced, and the output in the L-band is increased. Since the C-band has a wide wavelength, the strength of the total power is big, but the strength of the peak power is small.

More erbium ions in the EDF 203, which is the amplification medium, are excited as the peak power for each wavelength, rather than the total power, becomes greater, resulting in that the output in the L-band can be efficiently heightened. Accordingly, if the seed beam in the C-band is used, the seed beam on the front of the EDF is amplified to heighten the output, and thus the L-band can be more efficiently amplified using the amplified seed beam. At this time, a specified wavelength can be selected using the filter 210 for filtering the ASE generated from the EDFA to use the specified wavelength as the seed beam. It is preferable that the filter 210 according to the present invention is fixed to use the wavelength of 1559nm corresponding to the highest amplification efficiency.

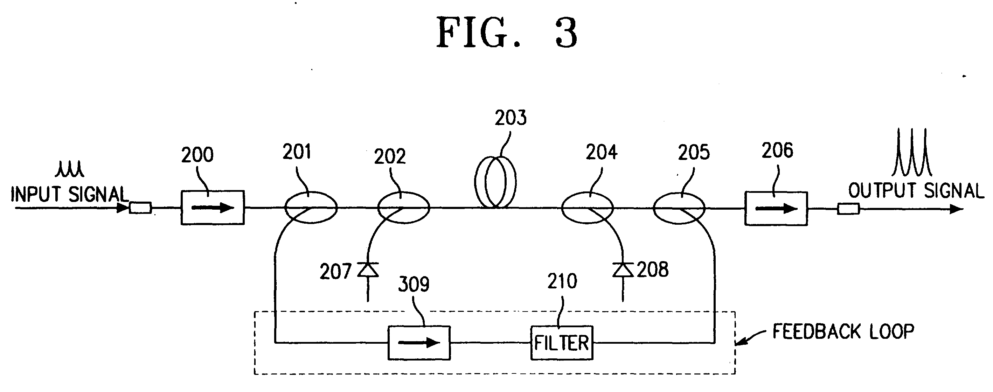

FIG. 3 is a block diagram illustrating the construction of an erbium doped fiber amplifier using a feedback loop according to the first embodiment of the present invention. Comparing the erbium doped fiber amplifier as shown in FIG. 3 with the erbium doped fiber amplifier as shown in FIG. 2, the installation direction of the optical isolator provided in the feedback loop is different from each other, but other elements are identical. Thus, only the point of difference thereof will be explained, but other explanations thereof omitted.

As shown in FIG. 3, the optical isolator provided in the feedback loop is a backward optical isolator. Specifically, the optical isolator 309 is installed in a backward direction of the signal light propagation. The backward optical isolator 309 is provided between the second wavelength selective coupler 201 and the filter 210. According to the above-described construction, the erbium ions in the EDF excited by the pumping light from the pump light source are spontaneously emitted, and this spontaneously emitted light generates a high output in the C-band by the stimulated emission. By making the ASE incident again, the output of the L-band can be efficiently heightened.

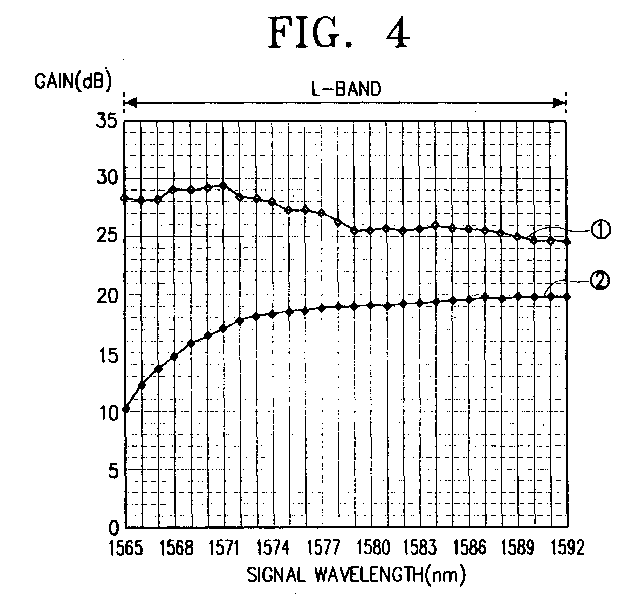

FIG. 4 is a graph illustrating the gain of the L-band EDFA according to the wavelength of the signal light in the case of using the seed beam (reference numeral "1") and in the case of using no seed-beam (reference numeral "2"). As shown in FIG. 4, when the seed beam is used in a given wavelength with respect to the signal light having the strength of -15dBm, the gain is increased over 5dB in comparison to the case that no seed beam is used. Though there exists some difference according to the length of the EDF and the wavelength and strength of the tested signal light, it can be recognized that the efficiency of the fiber amplifier is greatly increased in the case of using the seed beam.

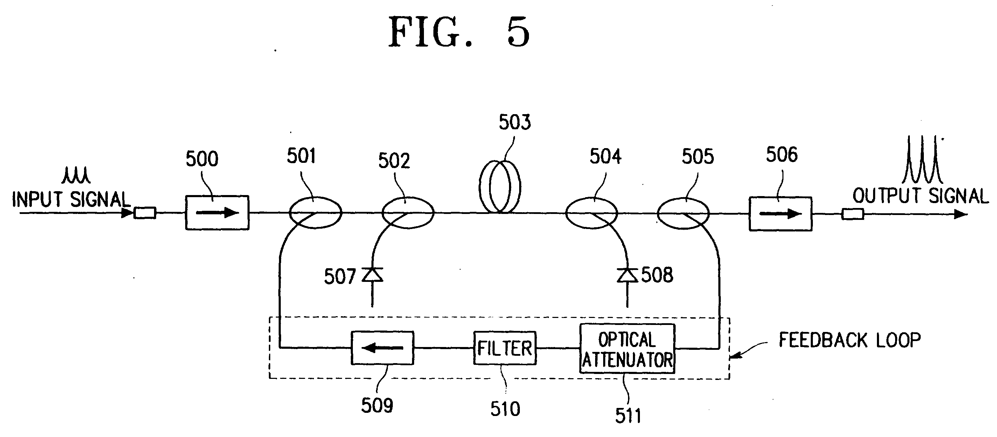

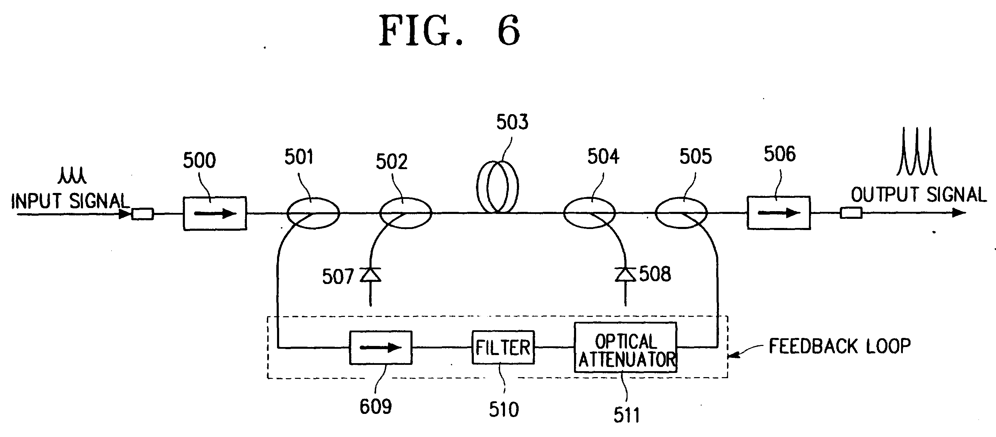

FIGs. 5 and 6 are block diagrams illustrating the construction of a fiber amplifier using a feedback loop according to a second embodiment of the present invention. As shown in FIGs. 5 and 6, the present invention has the construction which increases the output in the L-band by adding the seed beam to the existing erbium doped fiber amplifier. According to the fiber amplifier according to the present invention, an erbium doped fiber (EDF) 503 is used as the amplification medium, and optical isolators 500 and 506 are inserted on the front and rear of the EDF 503 to intercept the backward lights. Also, third wavelength selective couplers (WSC) 502 and 504 are used for making the respective pumping lights from pump light sources 507 and 508 incident to the EDF 503.

The fiber amplifier according to the present invention employs a feedback loop for using a specified wavelength of the ASE in order to make the seed beam. The feedback loop of the fiber amplifier according to the present invention uses a filter 510 for selecting the specified wavelength, and an optical isolator 509 for preventing the backward propagation of the fed-back seed beam. Also, the feedback loop according to the present invention employs an optical attenuator 511 for adjusting the strength of the input seed beam. At this time, the optical isolator 509 as shown in FIG. 5 is a forward optical isolator the propagation direction of which is the same as that of the signal light, and the optical isolator 609 as shown in FIG. 6 is a backward optical isolator the propagation direction of which is opposite to that of the signal light.

According to the present invention, two fourth wavelength selective couplers (WSC) 501 and 505 are used for making the seed beam incident again to the amplification medium, and the ASE is fed back to the amplification medium using the fourth wavelength selective couplers 501 and 505. The optical attenuator 511 is inserted between the fourth wavelength selective coupler 505 and the filter 509.

The operation of the erbium doped fiber amplifier as constructed above will be explained in detail. The input optical signal inputted through an input terminal is combined with the pumping light, which is generated from the third forward pump light source 507 provided on the front of the EDF 503, by the third wavelength selective coupler 502, and then is incident to the EDF 503. The pumping light generated from the backward pump light source 508 provided on the rear of the EDF 503 is incident to the EDF 503 through the third wavelength selective coupler 504. The incident forward and backward pumping lights excite erbium ions in the EDF 503. The light signal passing through the EDF is amplified by the stimulated emission of the excited erbium ions. The optical isolators 500 and 506 prevent the deterioration of the amplification efficiency of the optical signal by preventing the ASE generated from the EDF 503 from being reflected from optical elements such as a signal input/output connector.

Preferably, in order to heighten the output in the L-band using the fiber amplifier, the length of the amplification medium, i.e., the length of the EDF 503 is sufficiently lengthened. Especially, the length of the EDF 503 used for the L-band EDFA is over 10 times longer than that generally used for the C-band EDFA.

According to the fiber amplifier according to the present invention, the erbium ions in the EDF 503 excited by the pumping lights are spontaneously emitted, and then the ASE lights generate a high-output ASE in the L-band of 1528mn ∼ 1562mn by the stimulated emission. The high-output ASE generated in the C-band amplifies the signal light in the L-band as it passes through the EDF 503, and the remaining ASE is incident again through the feedback loop to be reused as the seed beam. If the length of the EDF 503 is lengthened, the output of the C-band is reduced, and the output in the L-band is increased. Since the C-band has a wide wavelength, the strength of the total power is big, but the strength of the peak power is small. More erbium ions in the EDF 503, which is the amplification medium, are excited as the peak power for each wavelength, rather than the total power, becomes greater, resulting in that the output in the L-band can be efficiently heightened. Accordingly, if the seed beam in the C-band is used, the wavelength is amplified to heighten the peak power in this wavelength, and thus the L-band can be can be more efficiently amplified. At this time, a specified wavelength can be selected using the filter 210 for filtering the ASE generated from the EDFA to use the specified wavelength as the seed beam.

The filter according to the present invention is fixed to use the wavelength of 1559nm corresponding to the highest amplification efficiency.

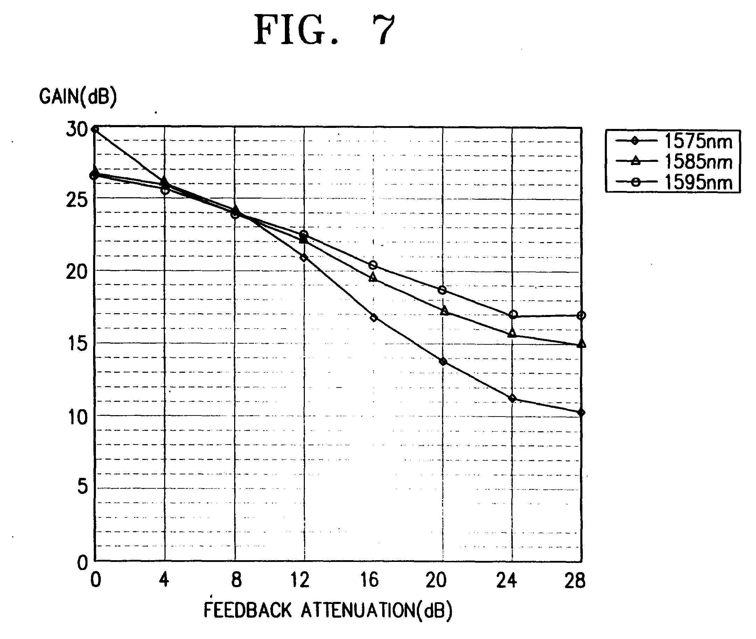

FIG. 7 is a graph illustrating the attenuation degree of signal lights in the feedback loop with respect to three signal lights having different wavelengths from one another, but the same strength, i.e., the gains of the three signal lights according to the strength of the seed beam. Referring to FIG. 7, as a result of test by changing the attenuation degree of the optical attenuator 511 in the feedback loop from 0dB to 28dB, it can be recognized that the gain of the fiber amplifier becomes high and even in the optical attenuation range of 4dB ∼ 8dB.

Since the gain and the gain evenness are changed according to the length of the EDF 503, which is the amplification medium of the fiber amplifier, the strength of the signal light, and the strength of the pumping light, the gain and the gain evenness of the fiber amplifier can be adjusted by changing the attenuation degree of the optical attenuator 511 in the feedback loop.

According to the present invention, for example, the gain and the gain evenness of the signal light were tested for three wavelengths of 1575nm, 1585nm, and 1595nm. In the case of using no seed beam, the gain of the fiber amplifier is lowered to 9.2dB ∼ 16.4dB, and the gain evenness thereof is 7.2dB. Meanwhile, as shown in FIG. 7, in the case of using the feedback loop wherein the attenuation degree of the optical attenuator 511 is 4.0dB, the gain of the fiber amplifier is 26dB, and the gain evenness thereof is 1.0dB. According to the present invention, the gain efficiency and the gain evenness of the fiber amplifier can be adjusted by using the feedback loop which can perform the optical attenuation in the range of 0dB ∼ 28dB as the testing range.

As described above, the present invention provides the advantages that the efficiency of the fiber amplifier is increased by increasing the gain of the fiber amplifier in the L-band using the seed beam, and the manufacturing cost can be reduced by reducing the number of pump laser diodes used for manufacturing the high-output EDFA. Also, according to the present invention, it is not required to use independent seed-beam light sources since the ASE of the EDFA is used. Further, the present invention has the merits that it can improve the gain and gain evenness of the fiber amplifier in the L-band using the seed beam, and can adjust the gain and gain evenness of the fiber amplifier by adjusting the optical attenuator in the feedback loop and changing the strength of the seed beam if the gain and gain evenness of the fiber amplifier is changed according to the length of the EDF which is the amplification medium in the fiber amplifier, strength of the signal light, and strength of the pumping light.

While this invention has been described in connection with what is presently considered to be the most practical and preferred embodiments in that the fiber amplifier can obtain a high output in the L-band by adding a filter, optical isolator, or optical attenuator to the existing fiber amplifier, it is to be understood that other modifications thereof may be made without departing from the scope of the invention. Thus, the invention should not be limited to the disclosed embodiment, but should be defined by the scope of the appended claims and their equivalents.

## Claims

1. A long-band (L-band) fiber amplifier comprising:
a rare earth doped fiber (203, 503) as an amplification medium;
forward and backward pump laser diodes (207, 208, 507, 508), positioned on front and rear ends of the rare earth doped fiber (203, 503), respectively, for generating pumping lights;
first wavelength selective couplers (202, 204, 502, 504) for providing the pumping lights from the pump laser diodes (207, 208, 507, 508) to the rare earth doped fiber (203, 503);
optical isolators (200, 206, 500, 506), inserted into front and rear ends of the first wavelength selective couplers (202, 204, 502, 504), respectively, for intercepting backward propagation of signal lights reflected from input and output terminals of the fiber amplifier;
a feedback loop for making a seed beam incident to the rare earth doped fiber (203, 503) or making an amplified spontaneous emission (ASE) incident again to the rare earth doped fiber (203, 503);
second wavelength selective couplers (201, 205, 501, 505), provided between the optical isolators (200, 206, 500, 506) and the first wavelength selective couplers (202, 204, 502, 504), respectively, for making the seed beam incident to the feedback loop or extracting and providing the ASE to the feedback loop; and
a filter (210, 510), connected to the feedback loop, for filtering a specified wavelength of the seed beam or the ASE.

2. The L-band fiber amplifier as claimed in claim 1, further comprising a further optical isolator (209, 309, 509, 609), provided in the feedback loop, for intercepting backward propagation of the seed beam or the ASE.

3. The L-band fiber amplifier as claimed in claim 2, wherein the further optical isolator (209, 309, 509, 609) is a forward optical isolator (309, 609) for making the seed beam incident in the same direction as the signal light, or a backward optical isolator (209, 509) for making the seed beam incident in the opposite direction to the signal light.

4. The L-band fiber amplifier as claimed in claim 2 or 3, wherein the further optical isolator (209, 309, 509, 609) is provided between the second wavelength selective coupler (201, 205, 501, 505) and a front or rear of the filter (210, 510).

5. The L-band fiber amplifier as claimed in claim 1, wherein the rare earth is erbium.

6. The long-band (L-band) fiber amplifier as claimed in any of claims 1 to 5, further comprising:
an optical attenuator 511, connected between the second wavelength selective coupler (501, 505) and the filter (510), for attenuating a strength of the seed beam or the ASE to adjust a gain evenness of a source output.
